# EUROPÄISCHE PATENTSCHRIFT

(11) **EP 2 787 146 B1**
(45) Veröffentlichungstag und Bekanntmachung des Hinweises auf die Patenterteilung: **08.02.2017**
(21) Anmeldenummer: 14000878.0
(22) Anmeldetag: 12.03.2014
(51) Int. Cl.: E04F 15/10, A47G 27/02, E04F 13/08, B32B 37/12, B32B 21/06, B32B 3/06, B32B 37/08, B32B 5/02, B32B 5/08, B32B 21/10, B32B 37/18, B32B 43/00, B32B 7/12, B32B 9/02, B32B 9/04

(54) **Verfahren zur Herstellung einer Platte mit einer textilen Nutzschicht**
Method for the production of a board having a textile wear layer
Procédé de fabrication d'une plaque ayant une couche textile d'usure

(30) Priorität: 02.04.2013 DE 102013005515
(43) Veröffentlichungstag der Anmeldung: 08.10.2014
(73) Patentinhaber: Hülsta-Werke Hüls GmbH & Co. KG, 48703 Stadtlohn (DE)
(72) Erfinder: Schwitte, Richard, 48712 Gescher (DE); Strotmann, Burkhard, 46342 Velen (DE); ven der Buss, Johannes, 46342 Velen (DE); Tenbrock, Ludger, 46342 Velen (DE)
(74) Vertreter: Von Rohr Patentanwälte Partnerschaft mbB

(56) Entgegenhaltungen:
- EP-A1- 0 578 199
- DE-U1-202012 011 048
- US-A1- 2004 206 036
- US-A1- 2012 189 819

## Beschreibung

Die Erfindung betrifft ein Verfahren zur Herstellung einer Bodenbelags-, Wand- oder Deckenverkleidungsplatte und/oder Möbelbauteilplatte, insbesondere ausgebildet als Fassaden-, Paneel- oder Dielenelement, mit einem Plattengrundkörper und mit einer textilen Nutzschicht auf der Oberseite des Plattengrundkörpers.

Platten der eingangs genannten Art sind bereits aus dem Stand der Technik bekannt und werden in unterschiedlichen Anwendungsbereichen eingesetzt. Die bekannten Platten weisen üblicherweise einen Plattengrundkörper und eine auf den Plattengrundkörper aufgebrachte, außenseitige Nutzschicht auf. Der Plattengrundkörper fungiert als Tragschicht und muss als stützendes oder verbindendes Element Lasten aufnehmen und eine dauerhafte Dimensionsstabilität gewährleisten. Die Nutzschicht stellt die oberste Schicht der Platte dar, die entweder primär und unmittelbar einer Begehung durch Menschen bzw. einem Inkontakttreten mit anderen Objekten und einer damit verbundenen mechanischen Belastung ausgesetzt ist und/oder die als sichtbare Oberfläche eine Gestaltungsfunktion der Platte bei der Verkleidung oder Abdeckung oder deren Verwendung als Bauelement übernimmt. Nutzschichten können dazu vorgesehen sein, die Abrieb- oder Kratzfestigkeit der in Rede stehenden Platten gegenüber mechanischer Beanspruchung zu erhöhen. Darüber hinaus kann die Nutzschicht zum Schutz vor Durchfeuchtung des Plattengrundkörpers vorgesehen sein, was insbesondere für die Verwendung der Platte im Außenbereich von Vorteil ist. Dekorschichten können dem Plattengrundkörper das natürliche Aussehen von beliebigen Rohstoffen verleihen. Darüber hinaus können Nutzschichten dazu beitragen, dem Plattengrundkörper eine bestimmte Feuerfestigkeit und/oder ein bestimmtes Schadstoffabsorptionsvermögen zu verleihen.

Aus der DE 202 07 844 U1 ist ein Teppichbodenbelagselement bekannt, das eine im Wesentlichen rechteckförmige Trägerplatte aufweist, an deren Oberseite eine entsprechend bemessene Teppichware befestigt ist. Wenigstens zwei parallel gegenüberliegende Seitenränder der Trägerplatte besitzen eine profilförmige Ausbildung, die eine lösbare Steckverbindung des Teppichbodenbelagselementes mit einem entsprechend ausgebildeten Teppichbodenbelagselement ermöglicht. Das bekannte Teppichbodenbelagselement kann sofort auf einem betreffenden Unterboden zur Herstellung des Teppichbodenbelags z. B. in einem Wohnraum verlegt werden.

Die Herstellung des bekannten Teppichbodenbelagselementes kann so erfolgen, dass auf eine fertig hergestellte und mit profilierten Seitenrändern versehene Trägerplatte ein entsprechend zugeschnittenes Teppichbodenstück aufgeklebt wird. Das Aufkleben eines Teppichbodenstücks auf eine Trägerplatte, so dass das Teppichbodenstück deckungsgleich mit einer oberen Tragfläche der Trägerplatte ist, ist jedoch aufwendig und nur eingeschränkt möglich. Im Verbund mit anderen, entsprechend ausgebildeten Teppichbodenbelagselementen kann dies dazu führen, dass die Fugen zwischen den Teppichbodenstücken benachbarter Teppichbodenbelagselemente deutlich erkennbar sind, was unerwünscht ist, da durch die Fugen auch die einzelnen Teppichbodenbelagselemente als solche erkennbar sind. Das Aussehen eines unterbrechungslosen textilen Bodenbelags, der vollflächig den Boden eines Raumes bedeckt, lässt sich daher mit den bekannten Teppichbodenbelagselementen nicht in zufriedenstellender Weise erreichen.

Aus der DE 1872548 U ist ein plattenförmiges Bauelement zur Herstellung von Fußböden bekannt, das eine aus einer Holzspanplatte gebildete Tafel mit einem dauerhaft darauf befestigten trittfesten Belag aufweist, die mit weiteren gleichartigen Tafeln zu einer Fußbodenfläche zusammensetzbar ist. Als Belag kann ein Gewebematerial, wie ein teppichähnliches Material, Anwendung finden. Bei der Herstellung der Fußbodenbeläge wird so verfahren, dass die Belagsstoffe bzw. Belagsschichten über die Kanten der Holzspanplatten hinausragen, so dass sich die Kanten der Belagsschichten beim Verlegen der plattenförmigen Bauelemente aneinanderpressen und auf diese Weise unsichtbare Fugen ergeben sollen. Beim Begehen des aus den bekannten Bauelementen gebildeten Belages verfilzen die zusammengepressten Kanten jedoch zunehmend, so dass auch hier die Übergänge zwischen benachbarten Bauelementen des Belages aufgrund einer unterschiedlichen Verschmutzungsneigung der Übergänge nach einiger Zeit deutlich erkennbar sind.

Aufgabe der vorliegenden Erfindung ist es, ein Verfahren zur Herstellung einer Platte der eingangs genannten Art zur Verfügung zu stellen, wobei die Platte im Verbund mit anderen, entsprechend ausgebildeten Platten als solche von einem Betrachter nicht oder wenig auffällig wahrgenommen wird, so dass der Plattenverbund die äußere Erscheinungsform eines im Wesentlichen unterbrechungslosen textilen Bodenbelages annimmt, der vollflächig einen Untergrund bedeckt.

Die vorgenannte Aufgabe wird bei einem Verfahren der eingangs genannten Art dadurch gelöst, dass zunächst ein Plattengrundkörper der Platte durch Kantenbearbeitung des Plattengrundkörpers an den Längsseiten und/oder Querseiten formatiert wird, dass danach eine an wenigstens einer Längsseite und/oder Querseite des Plattengrundkörpers seitlich über eine obere Randkante des Plattengrundkörpers auf dessen oberer Flachseite überstehende textile Nutzschicht auf den Plattengrundkörper aufgebracht wird und dass die überstehende textile Nutzschicht nach dem Aufbringen auf den Plattengrundkörper durch Beschneiden auf die Maße des Plattengrundkörpers formatiert wird. Insbesondere erfolgt das Formatieren der Nutzschicht derart, dass in einem Verbund gebildet aus einer Mehrzahl von Platten die Fugen zwischen den textilen Nutzschichten benachbarter Platten als solche nicht oder lediglich geringfügig wahrgenommen werden und der Verbund in der Art eines unterbrechungslosen textilen Bodenbelages wahrgenommen wird. Dies setzt vorzugsweise voraus, dass die Nutzschicht nach dem Formatieren seitlich über den Plattengrundkörper geringfügig übersteht, weiter vorzugsweise um weniger als 2 mm, besonders bevorzugt um weniger als 1 mm oder um weniger als 0,5 mm.

Erfindungsgemäß wird eine überdimensionierte, d. h. eine größere Grundfläche als der Plattengrundkörper aufweisende Nutzschicht auf den Plattengrundkörper aufgebracht, wobei die Nutzschicht erst nach dem Aufbringen exakt auf die Maße des Plattengrundkörpers zugeschnitten wird. Damit lässt sich in einfacher Weise eine sehr hohe Deckungsgleichheit zwischen der Oberfläche der textilen Nutzschicht und einer oberen Trägerfläche des Plattengrundkörpers erzielen, was im Verbund der erfindungsgemäß hergestellten Platten dazu führt, dass die Fugen zwischen den textilen Nutzschichten benachbarter Platten als solche nicht oder lediglich geringfügig wahrgenommen werden und der Verbund in der Art eines unterbrechungslosen textilen Bodenbelages wahrgenommen wird. Nach dem Beschneiden sind die Nutzschicht und die obere Trägerfläche des Plattengrundkörpers im wesentlichen gleichdimensioniert, wobei die Nutzschicht den Plattengrundkörper vollflächig überdeckt. Durch das exakte Beschneiden der textilen Nutzschicht nach deren Aufbringung auf den Plattengrundkörper kommt es auch beim anschließenden Begehen des Plattenverbundes nicht dazu, dass die aneinandergrenzenden Kanten der textilen Nutzschichten der Platten miteinander verfilzen, so dass auch nach längerem Begehen des Plattenverbundes die äußere Erscheinungsform eines unterbrechungslosen textilen Bodenbelages nicht durch zusammengepresste und verfilzte Kanten der Nutzschichten gestört wird.

Bei einer "textilen Nutzschicht" im Sinne der Erfindung kann es sich um einen Faserverbund aus Faserstoffen handeln, wobei die Faserstoffe ausgewählt sein können aus der Gruppe der Pflanzenfasern, wie Kokos-, Sisal-, Jute-, Baumwoll- oder Hanffasern oder dergleichen, und/oder aus der Gruppe der tierischen Fasern, wie Schafwolle, Ziegenhaar oder Seide, und/oder aus der Gruppe der synthetischen Fasern, wie Polyacryl-, Polyamid-, Polyester- oder Polypropylenfasern, oder Mischungen der vorgenannten Gruppen. Es versteht sich, dass die vorgenannte Aufzählung von möglichen Faserstoffen nicht abschließend ist und dem Fachmann weitere Faserstoffe bekannt sind, die grundsätzlich einen Faserverbund bilden können.

Der Faserverbund kann auch aus wenigstens zwei unterschiedlichen Faserstoffen bestehen. Hierdurch können der textilen Nutzschicht unterschiedliche Eigenschaften verliehen werden, die auf die jeweils eingesetzten Faserarten zurückzuführen sind, wie insbesondere schalldämmende, schallabsorbierende, wärmeisolierende oder auch eine bestimmte haptische Wahrnehmung der textilen Nutzschicht gewährleistende Eigenschaften. So können beispielsweise Fasern in die textile Nutzschicht eingebunden sein, die schadstoffabsorbierend oder -adsorbierend sind, um bei Verwendung der Platte in Innenräumen ein gesundes Raumklima zu schaffen.

Vorzugsweise handelt es sich bei der textilen Nutzschicht um ein Gewebe, Gewirke oder Gestricke. Grundsätzlich kann die Textilschicht auch geknüpft oder getuftet sein. Besonders bevorzugt ist die Textilschicht ausgebildet als Teppichmaterial, nämlich als gewebter oder geknüpfter Teppich oder als Teppichbodenmaterial. Ein Teppichboden kann durch verschiedene Verfahren hergestellt werden, wie Beflocken, Klebepol-Verfahren, Nadeln, Tuften, Weben oder Wirken, wobei verschiedene Fasermaterialien zum Einsatz kommen können. Beispielsweise kann ein Veloursteppich oder ein Schlingenteppich die textile Nutzschicht bilden. Auch Polstertextilien und Bezugsstoffe, die üblicherweise im Möbelbau zum Einsatz kommen, sind grundsätzlich zur Verwendung als textile Nutzschicht im Sinne der Erfindung geeignet und vorteilhaft.

Darüber hinaus kann als textile Nutzschicht ein Vliesstoff, Filz, Walkstoff oder Mikrofaserstoff, wie Alcantara, nämlich ein auf Polyester und Polyurethan basierender Mikrofaserstoff, vorgesehen sein. Aus der Gruppe der Vliesstoffe können Kunstfaservliese, die chemische Fasern aus natürlichen oder synthetischen Polymeren, wie beispielsweise Polyamid (PA), Polyethylen (PE), Polyvinylchlorid (PVC), Polyester, insbesondere Polyethylenterephthalat (PET), aufweisen, und/oder Naturfaservliese, die tierische Fasern, wie Seide oder Wolle, insbesondere Ziegen- oder Schafswolle, oder pflanzliche Fasern, wie Hanf oder Baumwolle oder Seide, aufweisen, und/oder Mineralfaservliese, die mineralische Fasern, wie beispielsweise Glas, Asbest, Mineralwolle oder Basalt, aufweisen, vorteilhaft eingesetzt werden. Zur Fasergewinnung können Spinnverfahren, wie Trockenspinnen, Nassspinnen, Schmelzspinnen oder Matrixspinnen, zur Anwendung kommen. Die Verfestigung kann mechanisch, durch Vernadeln oder durch Wasserstrahlverfestigung, oder chemisch, durch die Zugabe von Bindemitteln, wie wasserbasierten Acrylatharzen oder Reaktivharzen, wie beispielsweise Phenol- oder Harnstoffharzen, oder Epox- oder Polyurethanbindemitteln, oder auch thermisch, durch das Erweichen in einem geeigneten Gasstrom, zwischen beheizten Walzen oder auch in einem Dampfstrom, erfolgen. Bei chemischen Verfestigungsverfahren kann durch das Bindemittel eine Verbesserung der mechanischen Eigenschaften des Textilmaterials erreicht werden, wie beispielsweise eine höhere Festigkeit und eine geringere Abriebsneigung. Durch zusätzliche Imprägnierungen können die Gebrauchseigenschaften verbessert werden. Beispielsweise lassen sich durch eine geeignete Imprägnierung die Schmutzempfindlichkeit des Textilmaterials senken und eine leichte Reinigbarkeit bei geringen Pflegeanforderungen erzielen. Auch ein UV-Schutz ist durch eine zusätzliche Imprägnierung möglich.

Als Alternative zu herkömmlichen formaldehydbasierten Reaktivharzen wie Phenol- oder Harnstoff-Formaldehydharzen oder als Alternative zu Epox- oder Polyurethanbindemitteln können rein wasserbasierte und formaldehydfreie Acrylatharze, wie ein unter dem Handelsnamen Acrodur® von der Firma BASF vertriebenes Bindemittel, eingesetzt werden, insbesondere für die Herstellung eines Vliesstoffes aus natürlichen Fasern.

Im Bereich der Vliesstoffe kommen so genannte "technische Textilien" zum Einsatz, die grundsätzlich auch als textile Nutzschicht auf dem Plattengrundkörper vorgesehen sein können. Hier können Textilmaterialien vorgesehen sein, die aus dem Flugzeugbau, dem Boots- und Schiffbau und der Bauindustrie, wie zur Verwendung für dauerhafte Textildächer, bekannt sind. Die technischen Textilien umfassen insbesondere Kohlefaser- und Polyesterverbundstoffe.

Vorzugsweise erfüllt die textile Nutzschicht die Anforderungen an Fußbodenbeläge nach DIN EN 1307, insbesondere die Anforderungen an Trittschallschutz (DIN EN ISO 140-8), Schallabsorption (DIN EN 20354) und/oder Wärmedurchlasswiderstand (ISO 8302). Schließlich kann die textile Nutzschicht bei der erfindungsgemäßen Platte eine Imprägnierungsfunktion erfüllen und/oder sich durch eine bestimmte Feuerfestigkeit auszeichnen und damit eine Brandschutzfunktion erfüllen. Durch Verwendung von bestimmten textilen Materialien lassen sich darüber hinaus schadstoffabsorbierende bzw. -verringernde Wirkungen der Nutzschicht erreichen.

Der Plattenwerkstoff des Plattengrundkörpers kann ausgewählt sein aus der Gruppe der Holzwerkstoffe, insbesondere auf Vollholz- oder Furnierholzbasis, der Holzspanwerkstoffe, der Holzfaserwerkstoffe und/oder der Verbundwerkstoffe auf Holz-, Kunststoff-, Zellstoff- und/oder Mineralstoffbasis, und/oder aus der Gruppe der Kunststoffe und/oder aus der Gruppe der Mineralstoffe und/oder aus der Gruppe der lignin- und/oder zellulosebasierten Werkstoffe und/oder aus der Gruppe der keramischen Werkstoffe und/oder deren Mischungen. Zusätzlich können Bindemittel und Zusatzstoffe vorgesehen sein, um dem Plattenwerkstoff die gewünschten Eigenschaften zu verleihen. Besonders bevorzugt handelt es sich bei dem Plattengrundkörper um eine HDF- oder MDF-Platte, was der Platte eine hohe Festigkeit und Steifigkeit verleiht und eine kostengünstige Herstellung zulässt. Auch können Tischler- oder Sperrholzplatten als Plattengrundkörper eingesetzt werden. Im Übrigen kann zur Herstellung des Plattengrundkörpers ein recycelter Plattenwerkstoff eingesetzt werden. Darüber hinaus kann der Plattenwerkstoff Biokunststoffe, Gips oder Gipsfasern sowie weitere Werkstoffe enthalten oder daraus bestehen.

Der Plattengrundkörper kann eine Dicke von vorzugsweise 3 bis 20 mm, insbesondere von 5 bis 10 mm, weiter insbesondere von 6 bis 7 mm, aufweisen. Es versteht sich, dass die vorgenannten Produktstärken nicht zwingend vorgesehen sein müssen.

Die textile Nutzschicht kann in einem Fertigzustand auf den Plattengrundkörper aufgebracht, insbesondere aufkaschiert oder aufgepresst, sein, was eine einfache und kostengünstige Fertigung der erfindungsgemäßen Platte zulässt. Bei dieser Ausführungsform wird im Ergebnis ein Gewebe, Gewirke oder Gestricke oder ein Vliesstoff, Filz, Walkstoff oder Mikrofaserstoff auf den Plattengrundkörper aufgebracht, wobei sich das textile Flächenmaterial bereits in einem Gebrauchszustand befindet. Die textile Nutzschicht kann beispielsweise als Bahnen- oder Rollenware eingesetzt werden. Insbesondere kann in diesem Zusammenhang die textile Nutzschicht ein Teppichbodenmaterial sein, wobei die bei Teppichböden übliche Rückseitenbeschichtung vorzugsweise nicht vorgesehen ist. Zum Aufkleben der Nutzschicht auf den Plattengrundkörper können beispielsweise (Heiß-)Schmelzkleber, Dispersionsleime und -kleber sowie reaktive Klebstoffe und Klebstoffe auf Polyurethanbasis eingesetzt werden. Bevorzugt werden Schmelzkleber eingesetzt. Die textile Nutzschicht kann eine Schichtdicke zwischen 0,2 bis 8 mm, vorzugsweise zwischen 0,5 bis 5 mm, insbesondere bis 2 mm, aufweisen. Es versteht sich, dass die erforderliche Dicke der Nutzschicht von der mechanischen Belastung im Gebrauchszustand und der Funktion und Aufgabe der Nutzschicht abhängen kann.

Um erfindungsgemäße Platten miteinander verbinden zu können, kann der Plattengrundkörper eine Verriegelungskontur, insbesondere eine Nut- oder Federkontur zur Ausbildung einer Nut- und Federverbindung oder eine Rastkontur zur Ausbildung einer Rastverbindung mit einem benachbarten komplementären Plattengrundkörper, aufweisen. Geeignete Verriegelungsmittel, beispielsweise zur Ausbildung einer Klickverbindung an den Längs- und/oder Querseiten des Plattengrundkörpers, ermöglichen bei geringem Zeitaufwand das einfache Verbinden von einzelnen erfindungsgemäßen Platten. Solche Platten können als Bodenbelagsplatten zum Einsatz kommen und sind im Vergleich zu als Rollen- oder Bahnenware zu verlegenden Teppichböden einfacher zu handhaben und zu verlegen. Eine Verbindungs- bzw. Verriegelungskontur der zuvor beschriebenen Art lässt sich vorzugsweise bei der Formatierung des Plattengrundkörpers durch Kantenbearbeitung des Plattengrundkörpers an den Längs- und/oder Querseiten ausbilden. Die Ausbildung von Verriegelungskonturen an dem Plattengrundkörper erfolgt somit erfindungsgemäß vor dem Aufbringen der textilen Nutzschicht auf den (fertig formatierten) Plattengrundkörper.

Grundsätzlich kann der Plattengrundkörper an wenigstens einer Längs- und/oder Querseite aber auch eine glatte Kante aufweisen, die bei der Formatierung des Plattengrundkörpers ausgebildet wird und sich über die gesamte Höhe bzw. Dicke des Plattengrundkörpers erstrecken kann.

Der erfindungsgemäß vorgesehene Überstand der textilen Nutzschicht beim Aufbringen auf den Plattengrundkörper bezieht sich vorzugsweise auf eine obere äußere Randkante einer ebenen Tragfläche des Plattengrundkörpers auf dessen oberer Flachseite. Für den Fall, dass der Plattengrundkörper auf seiner oberen Flachseite im äußeren Randbereich abgerundet ist oder eine Fase aufweist, bezieht sich der Überstand erfindungsgemäß auf eine virtuelle Schnittkante im Verlauf der Schnittlinie einer Ebene durch die obere ebene Trägerfläche des Plattengrundkörpers auf dessen oberer Flachseite mit einer vertikalen Ebene, die seitlich an den Plattengrundkörper im oberen Randbereich des Plattengrundkörpers gelegt ist.

Bei einer besonders bevorzugten Ausführungsform des erfindungsgemäßen Verfahrens kann ein an wenigstens einer Längs- und/oder Querseite des Plattengrundkörpers seitlich über eine untere Randkante des Plattengrundkörpers auf dessen unterer Flachseite überstehender Gegenzug auf den Plattengrundkörper aufgebracht werden, wobei der überstehende Gegenzug erst im Anschluss an das Aufbringen auf den Plattengrundkörper durch Beschneiden auf die Maße des Plattengrundkörpers formatiert wird. Der Gegenzug ist vorzugsweise vorgesehen, um einen Verzug des Plattengrundkörpers durch etwaig auftretende Spannungen zu vermeiden. Der Gegenzug kann zur Trittschalldämmung dienen und/oder als Unterbodenausgleichsschicht eine stabile Planlage des Plattengrundkörpers auf einem Untergrund gewährleisten. Der Gegenzug kann aus einer Korkschicht bestehen und/oder eine Papier- oder Pappschicht sein. Darüber hinaus können auch textile Nutzschichten der oben beschriebenen Art als Gegenzug auf der Unterseite des Plattengrundkörpers vorgesehen sein. Nach dem Beschneiden sind der Gegenzug und eine untere Trägerfläche des Plattengrundkörpers gleichdimensioniert, wobei der Gegenzug den Plattengrundkörper vollflächig unterdeckt. In Abhängigkeit von dem Material und den Eigenschaften des Plattengrundkörpers kann jedoch auch eine Ausbildung der Platte ohne Gegenzug möglich sein.

Um das Aufbringen der Nutzschicht und/oder des Gegenzuges auf den Plattengrundkörper zu vereinfachen, kann die Größe der Nutzschicht und/oder des Gegenzuges derart gewählt sein, dass der seitliche Überstand der Nutzschicht über die obere Randkante und/oder der seitliche Überstand des Gegenzuges über die untere Randkante vor dem Formatieren zwischen 0,1 bis 10 mm, vorzugsweise zwischen 2 bis 5 mm, insbesondere ca. 3 mm, beträgt. Die vorgenannten Werte beziehen sich insbesondere auf den seitlichen Überstand der Nutzschicht, während der Gegenzug durchaus auch noch weiter über die untere Randkante des Plattengrundkörpers überstehen kann. Die erfindungsgemäß vorgesehene Breite des Überstandes vereinfacht das Beschneiden der Nutzschicht und/oder des Gegenzuges beim Formatieren und stellt sicher, dass die Nutzschicht und/oder der Gegenzug sehr exakt auf die Maße des Plattengrundkörpers zugeschnitten werden kann. Zudem wird der Materialverlust beim Beschneiden der Nutzschicht und/oder des Gegenzuges gering gehalten.

Der Plattengrundkörper kann an wenigstens einer Längsseite und/oder Querseite ein Verbindungs- oder Verriegelungsprofil aufweisen, wobei das Verbindungsprofil seitlich über die obere Randkante und/oder über die untere Randkante des Plattengrundkörpers übersteht und wobei die Größe der Nutzschicht und/oder des Gegenzuges derart gewählt wird, dass der seitliche Überstand der Nutzschicht und/oder des Gegenzuges vor dem Beschneiden auf das Maß des Plattengrundkörpers kleiner ist als der seitliche Überstand des Verbindungsprofils oder dem seitlichen Überstand des Verbindungsprofils entspricht. Erfolgt beispielsweise die Verbindung benachbarter erfindungsgemäß hergestellter Platten über Nut- und Federkonturen, kann erfindungsgemäß vorgesehen sein, dass die Nutzschicht und/oder der Gegenzug beim Aufbringen auf den Plattengrundkörper nicht über den Nut- bzw. Federüberstand des Plattengrundkörpers hinausragen. Insbesondere ist jedoch vorgesehen, dass die Nutzschicht nicht über das Verbindungsprofil hinausragt, während der Gegenzug durchaus an wenigstens einer Längs- und/oder Querseite des Plattengrundkörpers über das gebildete Verbindungsprofil überstehen kann. Die zuvor beschriebenen Merkmale vereinfachen das Formatieren der Nutzschicht und/oder des Gegenzuges durch Beschneiden auf die Maße des Plattengrundkörpers und gewährleisten einen geringen Materialverlust.

Bei geeigneter Ausbildung der Schneidwerkzeuge und/oder des Schneidprozesses beträgt die zulässige Abweichung (Toleranz) der jeweiligen Schnittkante der Nutzschicht bzw. des Gegenzuges von der Gutkante des Plattengrundkörpers beim Formatieren der Nutzschicht und/oder des Gegenzuges durch Beschneiden zwischen ± 0,02 mm und ± 0,5 mm, vorzugsweise zwischen ± 0,05 mm und ± 0,1 mm. Die Nutzschicht bzw. der Gegenzug weisen im Ergebnis eine hohe Maßhaltigkeit auf, wobei die Istmaße der Nutzschicht bzw. des Gegenzuges innerhalb der zulässigen Abweichung (Toleranz) vom festgelegten Nennmaß des Plattengrundkörpers liegen.

Um das Verfahren der Plattenherstellung weiter zu vereinfachen und einen hohen Automatisierungsgrad zu erreichen, ist es zweckmäßig, wenn vorzugsweise in jeder Produktionsstufe "Formatieren des Plattengrundkörpers", "Formatieren der Nutzschicht" und "Formatieren des Gegenzuges" zuerst eine Bearbeitung des Plattengrundkörpers bzw. der Beschichtung(en) an den Längsseiten und anschließend eine Bearbeitung an den Querseiten erfolgt. Dies gilt insbesondere für die Formatierung der Nutzschicht und des Gegenzuges, wobei die Nutzschicht und der Gegenzug zunächst gleichzeitig an den Längsseiten des Plattengrundkörpers und in einem anschließenden Bearbeitungsschritt gleichzeitig an den Querseiten des Plattengrundkörpers beschnitten werden. Alternativ könnte auch zunächst eine Querbearbeitung und anschließend eine Längsbearbeitung erfolgen.

Das Formatieren der Nutzschicht und/oder des Gegenzuges durch Beschneiden kann vorzugsweise im Durchlaufverfahren erfolgen, wobei, weiter vorzugsweise, in einem ersten Bearbeitungsschritt eine Längsbearbeitung der Nutzschicht und/oder des Gegenzuges und anschließend in einem zweiten Bearbeitungsschritt eine Querbearbeitung vorgesehen ist. Das Beschneiden der Nutzschicht und/oder des Gegenzuges im Durchlaufverfahren lässt einen hohen Automatisierungsgrad bei der Herstellung der erfindungsgemäßen Platte zu, was zu geringen Herstellungskosten führt. Die Herstellung im Durchlaufverfahren zeichnet sich insbesondere dadurch aus, dass die Plattengrundkörper bei der Bearbeitung nicht gedreht und/oder nicht gewendet werden, sondern stets in einer gleichen Bewegungsrichtung in Längsrichtung des Plattenkörpers oder in Querrichtung des Plattengrundkörpers die Produktionsstufen "Formatieren der Nutzschicht" und/oder "Formatieren des Gegenzuges" passieren. Vorzugsweise erfolgt auch das Formatieren des Plattengrundkörpers in einer vorgelagerten Produktionsstufe ebenfalls im Durchlaufverfahren, so dass die Platten bei der gesamten Plattenherstellung nicht gedreht und/oder nicht gewendet werden. Das Verkleben der Nutzschicht und/oder des Gegenzuges mit dem Plattengrundkörper kann ebenfalls im Durchlaufverfahren erfolgen. Darüber hinaus kann vorgesehen sein, dass die kontinuierliche Bewegung der Platten beim Durchlaufen der Produktionsstufen verzögert wird, so dass ausreichend Zeit für die Plattenbearbeitung in der nächsten Produktionsstufe zur Verfügung steht. Zu diesem Zweck können entsprechend ausgebildete Sammelstrecken zwischen den Produktionsstufen vorgesehen sein. Zudem werden die Platten bei der Herstellung im Durchlaufverfahren vorzugsweise kontinuierlich weiterbewegt, kontinuierlich den verschiedenen Produktionsstufen zugeführt und dort auch kontinuierlich bearbeitet, was einen hohen Automatisierungsgrad bei der Plattenfertigung zulässt.

Grundsätzlich ist es jedoch auch möglich, dass die Bewegung der Platten zumindest abschnittsweise für eine Bearbeitung unterbrochen und die Platten im stationären angehaltenen Zustand bearbeitet werden. Beispielsweise kann insbesondere das Beschneiden der Nutzschicht und/oder des Gegenzuges stationär bei ruhendem Plattengrundkörper erfolgen. Weiter insbesondere kann das Verkleben der Nutzschicht und/oder des Gegenzuges mit dem Plattengrundkörper taktend erfolgen.

Zur Führung der Plattengrundkörper beim Beschneiden der Nutzschicht und/oder des Gegenzuges kann wenigstens ein Anschlag vorgesehen sein, der eine exakte (geradlinige) Bewegung der Plattengrundkörper beim Beschneidungsvorgang vorgibt. Die Platten können an wenigstens einer feststehenden Schneideinrichtung vorbeibewegt werden, so dass der Überstand der Nutzschicht und/oder des Gegenzuges mit einem ziehenden Schnitt abgetrennt wird. Durch den Anschlag kann eine Nulllinie definiert sein, entlang derer die Nutzschicht und/oder der Gegenzug beim Beschneidungsvorgang geschnitten werden.

Das Formatieren der Nutzschicht und/oder des Gegenzuges erfolgt vorzugsweise derart, dass der Plattengrundkörper beim Beschneiden der Nutzschicht und/oder des Gegenzuges nicht beschädigt wird und es zu einem spanlosen Abtrennen des Überstandes von der Nutzschicht und/oder dem Gegenzug kommt.

Zum Beschneiden der Nutzschicht und/oder des Gegenzuges kann wenigstens eine Schneideinrichtung vorgesehen sein, die ein feststehendes bzw. ortsfest zum bewegten Plattengrundkörper angeordnetes Schneidwerkzeug, wie eine feststehende Klinge oder ein Messer, aufweisen kann. Grundsätzlich können jedoch auch feststehende rotierende Schneidwerkzeuge zum Einsatz kommen und es kann zum Beschneiden wenigstens ein zahnloses Werkzeug, wie ein Rundmesser oder ein Bogenmesser, verwendet werden. Mit feststehenden Schneidwerkzeugen erfolgt dann vorzugsweise das Abtrennen des Überstandes an gegenüberliegenden ersten Seiten des Plattengrundkörpers, beispielsweise den Längsseiten. Zum Abtrennen des verbleibenden Überstandes an den anderen gegenüberliegenden Seiten des Plattengrundkörpers, beispielsweise den Querseiten, können dagegen bewegbar angeordnete Schneidwerkzeuge vorgesehen sein. Diese Schneidwerkzeuge werden in der Bewegungsrichtung der Platten zusammen mit den Platten beim Durchlaufen des Produktionsvorgangs "Formatieren der Nutzschicht/des Gegenzuges" mitbewegt und führen dabei eine Schnittbewegung quer zur Bewegungsrichtung der Platten aus, um den verbleibenden Überstand abzutrennen. Damit ist das Beschneiden der Nutzschicht und/oder des Gegenzuges bei kontinuierlicher Vorwärtsbewegung der Platten möglich. Das gleiche kann selbstverständlich auch vorgesehen sein im Zusammenhang mit dem Formatieren der Plattengrundkörper durch seitliche Kantenbearbeitung, wobei hier feststehende Fräseinrichtungen zur Bearbeitung der Längsseiten des Plattengrundkörpers und bewegbar angeordnete Fräseinrichtungen zur Bearbeitung der Querseiten des Plattengrundkörpers zum Einsatz kommen können. Es versteht sich, dass alternativ auch eine Beschneidung des verbleibenden Überstandes bzw. der seitlichen Kanten des Plattengrundkörpers bei ruhender Platte vorgesehen sein kann.

Die Werkzeuge zum Beschneiden der Nutzschicht und/oder des Gegenzuges unterliegen einem hohen Verschleiß, so dass bei einer bevorzugten Ausführungsform der Erfindung zum Beschneiden der Nutzschicht und/oder des Gegenzuges selbstschärfende Schneidwerkzeuge eingesetzt werden. Grundsätzlich ist es auch möglich, dass das Schneidwerkzeug bei einer Herstellung der Platten im Durchlaufverfahren während des laufenden Produktionsprozesses geschärft wird. Dadurch lassen sich Unterbrechungen des Produktionsprozesses zum Schärfen der Werkzeuge vermeiden, was zu einer hohen Wirtschaftlichkeit des erfindungsgemäßen Verfahrens beiträgt.

Die zuvor beschriebenen Merkmale und die nachfolgend anhand der Zeichnung beschriebenen Merkmale können unabhängig voneinander vorgesehen sein oder beliebig miteinander kombiniert werden, auch wenn dies nicht im Einzelnen ausdrücklich beschrieben ist.

Die Erfindung wird nachfolgend anhand der Zeichnung exemplarisch erläutert. In der Zeichnung zeigen
- Fig. 1: ein Ablaufschema der Plattenherstellung nach dem erfindungsgemäßen Verfahren, wobei die Plattenherstellung in einem Durchlaufverfahren erfolgt und die einzelnen Platten in einer perspektivischen Ansicht schräg von oben gezeigt sind,
- Fig. 2: die Abfolge unterschiedlicher Produktionsstufen bei der Herstellung von Platten nach dem erfindungsgemäßen Verfahren und
- Fig. 3: die Beschneidung eines Überstandes einer oberseitigen Nutzschicht bei der Plattenherstellung nach dem erfindungsgemäßen Verfahren.

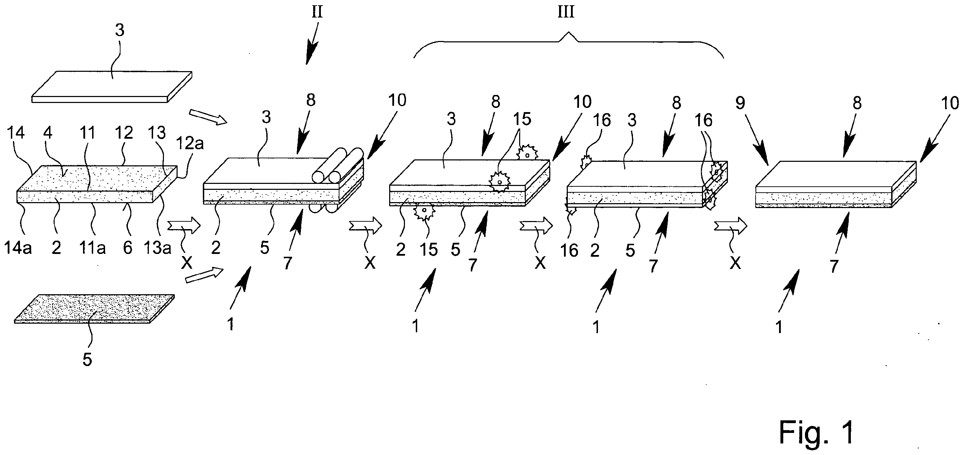

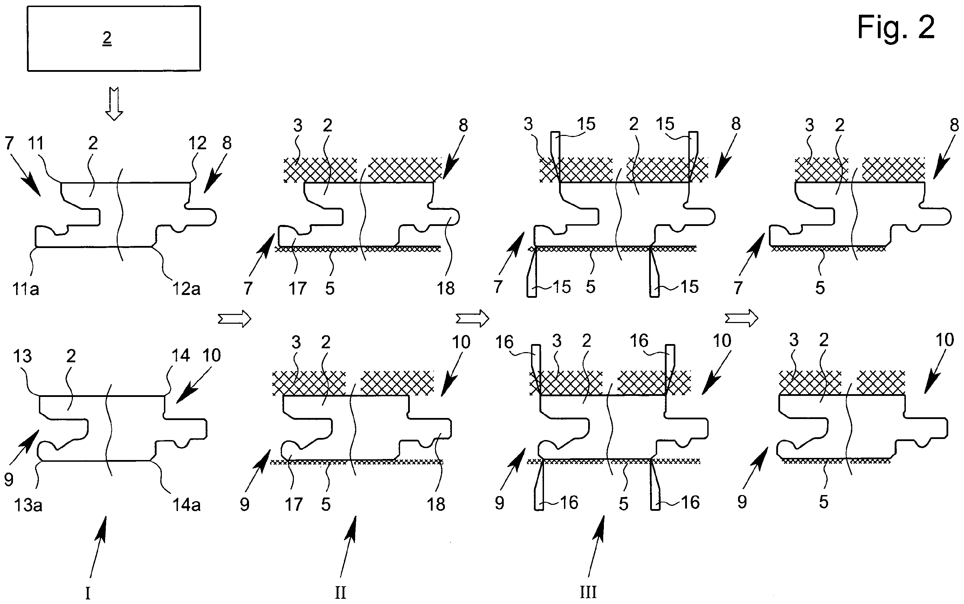

In Fig. 1 ist schematisch ein Verfahren zur Herstellung einer Platte 1 gezeigt, bei der es sich um eine Bodenbelagsplatte handeln kann. Die Herstellung der Platte 1 erfolgt in einem Durchlaufverfahren, wobei ein Plattengrundkörper 2 in einer in Fig. 1 nicht dargestellten Produktionsstufe I (dargestellt in Fig. 2) durch Kantenbearbeitung des Plattengrundkörpers 2 an den Längsseiten 7, 8 und Querseiten 9, 10 formatiert wird. Die Formatierung erfolgt insbesondere zu dem Zweck, an den Längs-und Querrändern des Plattengrundkörpers 2 entsprechende Verriegelungskonturen auszubilden, die es zulassen, mehrere Platten 1 zu einem Plattenverbund zusammenzufügen. Vorzugsweise erfolgt die Verbindung bzw. Verriegelung benachbarter Platten 1 im Verbund über so genannte Klickverbindungen bzw. Klickprofile, wobei es sich bei dem Plattengrundkörper 2 vorzugsweise um eine HDF-Platte handelt.

In der Prozessstufe II wird eine textile Nutzschicht 3 auf eine ebene Trägerfläche 4 mit einem Schmelzkleber aufkaschiert, was im Durchlaufverfahren erfolgt. Grundsätzlich ist es aber auch möglich, dass eine Beschichtung des Plattengrundkörpers 2 mit der textilen Nutzschicht 3 in einem Pressverfahren taktend erfolgt.

Darüber hinaus wird in der Prozessstufe 2 ein Gegenzug 5 von unten auf eine untere ebene Tragfläche 6 des Plattengrundkörpers 2 mit einem Schmelzkleber aufkaschiert. Dies erfolgt wiederum vorzugsweise in einem Durchlaufverfahren und, weiter vorzugsweise, gleichzeitig mit dem Aufbringen der textilen Nutzschicht 3 auf den Plattengrundkörper 2. Der Gegenzug 5 besteht vorzugsweise aus Kork und dient zur Trittschalldämmung einerseits und für eine stabile Planlage der Platten 1 auf einem Untergrund andererseits.

Wie sich aus Fig. 2 ergibt, wird in der Produktionsstufe II eine textile Nutzschicht 3 auf den Plattengrundkörper 2 aufgebraucht, die seitlich über die oberen Randkanten 11, 12 an den Längsseiten 7, 8 des Plattengrundkörpers 2 einerseits und über die oberen Randkanten 13, 14 an den Querseiten 9, 10 des Plattengrundkörpers 2 andererseits übersteht. Das gleiche gilt für den Gegenzug 5, was sich ebenfalls aus Fig. 2 ergibt. Der seitliche Überstand der Nutzschicht 3 über die oberen Randkanten 11 - 14 des Plattengrundkörpers 2 kann jeweils zwischen 0,1 bis 10 mm, vorzugsweise ca. 3 mm, betragen. Wie sich aus Fig. 2 weiter ergibt, kann der seitliche Überstand insbesondere des Gegenzuges 5 auch größer sein, was auch materialabhängig ist. Vorzugsweise ist es so, dass zumindest die Nutzschicht 3 nicht über den Überstand einer Nut 17 und/oder einer Feder 18 einer Verriegelungskontur des Plattengrundkörpers 2 hinausragt. Dies ist in Fig. 2 für die Produktionsstufe II dargestellt. Dadurch wird das Beschneiden der Nutzschicht 3 und des Gegenzuges 5 in der anschließenden Produktionsstufe III vereinfacht und es wird der Materialverbrauch gering gehalten.

In der anschließenden Produktionsstufe III erfolgt das Formatieren der Nutzschicht 3 und des Gegenzuges 5 durch Beschneiden der Nutzschicht 3 und des Gegenzuges 5 auf die Maße des Plattengrundkörpers 2. Das Beschneiden der Nutzschicht 3 und des Gegenzuges 5 kann vorzugsweise gleichzeitig mit entsprechend ausgebildeten Schneidwerkzeugen 15, 16 erfolgen, was sich aus Fig. 1 ergibt. Bei den Schneidwerkzeugen 15, 16 handelt es sich beispielsweise um Rundmesser mit rotierender Klinge.

Das Beschneiden der Nutzschicht 3 und des Gegenzuges 5 erfolgt wiederum vorzugsweise im Durchlaufverfahren. Hierbei werden die Platten 1 beim Passieren der Produktionsstufe III lediglich in Längsrichtung X der Platten 1 vorwärts bewegt (Fig. 1). Eine Drehung der Platten 1 um eine vertikale Achse und eine Bewegung der Platten 1 in Querrichtung der Platten 1 ist während des gesamten Produktionsprozesses nicht vorgesehen. Das Beschneiden der Nutzschicht 3 und des Gegenzuges 5 erfolgt zunächst an den Längsseiten 7, 8 der Platten 1 mit rotierenden Schneidmessern 15, die ortsfest angeordnet sind. Zum Beschneiden der Nutzschicht 3 und des Gegenzuges 5 wird die Platte 1 an nicht dargestellten Anschlägen geführt und es werden die Nutzschicht 3 und der Gegenzug 5 an den Schneidmessern 5 entlangbewegt, so dass der jeweilige längsseitige Überstand der Nutzschicht 3 und des Gegenzuges 5 über den Plattengrundkörper 2 an dessen Längsseiten 7, 8 abgetrennt wird.

Bei der anschließenden Querbearbeitung erfolgt dann das Beschneiden der Nutzschicht 3 und des Gegenzuges 5 an den Querseiten 9, 10 des Plattengrundkörpers 2, wobei hier quer zur Längsrichtung X bewegbar angeordnete rotierende Schneidmesser 16 eingesetzt werden können. Die Schneidmesser 16 können an einer zusammen mit den Platten 1 in Längsrichtung X bewegbaren Schneideinrichtung befestigt sein, wobei die Schneideinrichtung mit einer zu bearbeitenden Platte 1 in Längsrichtung X verfahren wird, während die Schneidmesser 16 quer zur Längsrichtung X die an den Querseiten 9, 10 überstehenden Randbereiche der Nutzschicht 3 und des Gegenzuges 5 abtrennen. Grundsätzlich ist es aber möglich, dass zumindest die Querbearbeitung der Platten 1 taktend erfolgt, wobei eine zu bearbeitende Platte 1 angehalten wird und das Beschneiden der Nutzschicht 3 und des Gegenzuges 5 mit quer zur Längsrichtung X verfahrbaren aber in Längsrichtung X ortsfest angeordneten Schneidmessern 16 durchgeführt werden kann.

Die zulässige Abweichung (Toleranz) einer äußeren Schnittkante der Nutzschicht 3 und/oder des Gegenzuges 5 von der jeweiligen Randkante 11 - 14 bzw. 11a - 14a liegt im Bereich zwischen ± 0,02 mm und ± 0,5 mm, vorzugsweise zwischen ± 0,05 mm und ± 0,1 mm. Die Nutzschicht 3 bzw. der Gegenzug 5 weisen im Ergebnis eine hohe Maßhaltigkeit auf, so dass die Nutzschichten 3 der Platten 1 im Plattenverbund eine weitgehende geschlossene Oberfläche bilden.

Wie sich aus Fig. 2 ergibt, wird die Nutzschicht 3 im Bereich der oberen Randkanten 11, 12 des Plattengrundkörpers 2 geschnitten, so dass ein flächenbündiger Übergang der Nutzschicht 3 und des Plattengrundkörpers 2 an den Längsseiten 7, 8 und an den Querseiten 9, 10 der Platte 1 erreicht wird.

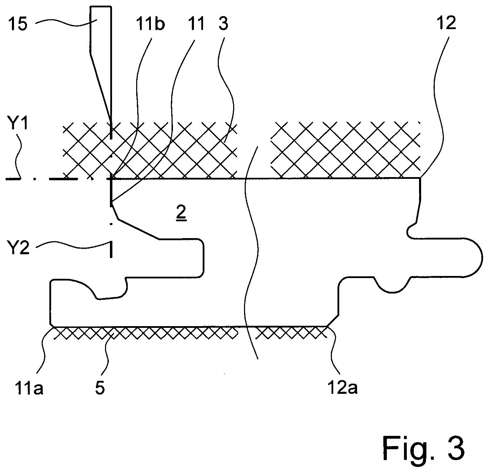

Wie sich aus Fig. 3 schematisch ergibt, kann der Plattengrundkörper 2 an seiner Oberseite auch einen angefasten oder abgerundeten Randbereich aufweisen, wobei hier der Überstand der Nutzschicht 3 dann nicht entlang der tatsächlichen oberen Randkante 11, sondern entlang einer virtuellen Randkante 11b geschnitten werden kann. Die virtuelle Schnittkante 11 b liegt im Bereich der Schnittlinie einer in die Trägerfläche 4 des Plattengrundkörpers 2 gelegten horizontalen Ebene Y1 mit einer seitlich an den Plattengrundkörper 2 im oberen Randbereich gelegten vertikalen Ebene Y2. Damit ist sichergestellt, dass die Nutzschichten 3 der Platten 1 im Plattenverbund eine weitgehende geschlossene Oberfläche auch dann bilden, wenn der Plattengrundkörper 2 angefaste oder abgerundete Ränder aufweist.

Das beschriebene und anhand der Fig. 1 bis 3 erläuterte Verfahren stellt sicher, dass die textile Nutzschicht 3 die Trägerfläche 4 des Plattengrundkörpers 2 bei hoher Maßgenauigkeit bzw. Deckungsgleichheit vollflächig überdeckt und an den oberen Randkanten 11 - 14 des Plattengrundkörpers 2 nicht seitlich übersteht. Bei Verlegung der Platten 1 in einem Plattenverbund lassen sich so die Fugen zwischen den Nutzschichten 3 benachbarter Platten 1 nicht oder nur schwer erkennen, so dass der Plattenverbund die äußere Erscheinungsform eines unterbrechungslosen textilen Bodenbelages aufweist, der vollflächig einen Untergrund bedeckt.

## Patentansprüche

1. Verfahren zur Herstellung einer Bodenbelagsplatte (1), Wand- oder Deckenverkleidungsplatte und/oder Möbelbauteilplatte, insbesondere ausgebildet als Fassaden-, Paneel- oder Dielenelement, mit einem Plattengrundkörper (2) und mit einer textilen Nutzschicht (3) auf der Oberseite des Plattengrundkörpers (2), wobei zunächst ein Plattengrundkörper (2) der Platte (1) durch Kantenbearbeitung des Plattengrundkörpers (2) an den Längsseiten (7, 8) und/oder Querseiten (9, 10) formatiert wird, **dadurch gekennzeichnet, dass** danach eine an wenigstens einer Längsseite (7, 8) und/oder Querseite (9, 10) des Plattengrundkörpers (2) seitlich über eine obere Randkante (11 - 14) des Plattengrundkörpers (2) auf dessen oberer Flachseite überstehende textile Nutzschicht (3) auf den Plattengrundkörper (2) aufgebracht wird und dass die überstehende textile Nutzschicht (3) nach dem Aufbringen auf den Plattengrundkörper (2) durch Beschneiden auf die Maße des Plattengrundkörpers (2) formatiert wird.

2. Verfahren nach Anspruch 1, **dadurch gekennzeichnet, dass** ein an wenigstens einer Längsseite (7, 8) und/oder Querseite (9, 10) des Plattengrundkörpers (2) seitlich über eine untere Randkante (11a - 14a) des Plattengrundkörpers (2) auf dessen unterer Flachseite (6) überstehender Gegenzug (5) auf den Plattengrundkörper (2) aufgebracht wird und dass der überstehende Gegenzug (5) nach dem Aufbringen auf den Plattengrundkörper (2) durch Beschneiden auf die Maße des Plattengrundkörpers (2) formatiert wird.

3. Verfahren nach Anspruch 1 oder 2, **dadurch gekennzeichnet, dass** die Größe der Nutzschicht (3) und/oder des Gegenzuges (5) derart gewählt wird, dass der seitliche Überstand der Nutzschicht (3) über die obere Randkante (11 - 14) und/oder der seitliche Überstand des Gegenzuges (5) über die untere Randkante (11a - 14a) vor dem Formatieren zwischen 0,1 bis 10 mm, vorzugsweise zwischen 2 bis 5 mm, insbesondere ca. 3 mm, beträgt.

4. Verfahren nach einem der vorhergehenden Ansprüche, **dadurch gekennzeichnet, dass** der Plattengrundkörper (2) an wenigstens einer Längsseite (7, 8) und/oder Querseite (9, 10) ein Verbindungsprofil aufweist, wobei das Verbindungsprofil seitlich über die obere Randkante (11 - 14) und/oder über die untere Randkante (11a - 14a) des Plattengrundkörpers (2) übersteht und wobei die Größe der Nutzschicht (3) und/oder des Gegenzuges (5) derart gewählt wird, dass der seitliche Überstand der Nutzschicht (3) und/oder des Gegenzuges (5) kleiner ist als der seitliche Überstand des Verbindungsprofils oder dem seitlichen Überstand des Verbindungsprofils entspricht.

5. Verfahren nach einem der vorhergehenden Ansprüche, **dadurch gekennzeichnet, dass** die Abweichung der jeweiligen Schnittkante der Nutzschicht (3) bzw. des Gegenzuges (5) von der Randkante (11 - 14; 11a - 14a) des Plattengrundkörpers (2) beim Formatieren der Nutzschicht (3) und/oder des Gegenzuges (5) durch Beschneiden zwischen ± 0,02 mm und ± 0,5 mm, vorzugsweise zwischen ± 0,05 mm und ± 0,1 mm, beträgt.

6. Verfahren nach einem der vorhergehenden Ansprüche, **dadurch gekennzeichnet, dass** bei der Formatierung des Plattengrundkörpers (2) und/oder bei der Formatierung der Nutzschicht (3) und/oder bei der Formatierung des Gegenzuges (5) eine Bearbeitung der Bodenbelagsplatte (1), Wand- oder Deckenverkleidungsplatte und/oder Möbelbauteilplatte nachfolgend zuerst an den Längsseiten und anschließend an den Querseiten erfolgt.

7. Verfahren nach einem der vorhergehenden Ansprüche, **dadurch gekennzeichnet, dass** die Nutzschicht (3) und der Gegenzug (5) gleichzeitig beschnitten und auf die Maße des Plattengrundkörpers (2) formatiert werden.

8. Verfahren nach einem der vorhergehenden Ansprüche, **dadurch gekennzeichnet, dass** das Formatieren der Nutzschicht (3) und/oder des Gegenzuges (5) durch Beschneiden im Durchlaufverfahren erfolgt.

9. Verfahren nach einem der vorhergehenden Ansprüche, **dadurch gekennzeichnet, dass** zum Beschneiden der Nutzschicht (3) und/oder des Gegenzuges (5) ein selbstschärfendes Schneidwerkzeug (15, 16) eingesetzt wird und/oder dass ein Schneidwerkzeug (15, 16) geschärft wird während der Herstellung der Platten (1) im Durchlaufverfahren.

10. Verfahren nach einem der vorhergehenden Ansprüche, **dadurch gekennzeichnet, dass** die Nutzschicht (3) und/oder der Gegenzug (5) mit dem Plattengrundkörper (2) verklebt wird, vorzugsweise im Durchlaufverfahren.

## Claims

1. Method for producing a floor covering plate (1), wall or ceiling cladding plate and/or furniture component plate, in particular designed as a facade, panel or floor element, having a plate base body (2) and a textile wear layer (3) on the top of the panel base body (2), wherein first a plate base body (2) of the plate (1) is formatted on the longitudinal sides (7, 8) and/or transverse sides (9, 10) by edge processing of the plate base body (2)
**characterized in that**
at least one longitudinal side (7, 8) and/or transverse side (9, 10) of the plate base body (2) is applied transversely over an upper edge (11 - 14) of the plate base body (2), wherein a textile wear layer (3) protruding over the upper flat side of the plate base body (2) is applied to the plate base body (2), and wherein the protruding textile wear layer (3) is formatted by trimming to the dimensions of the plate base body (2) after being applied to the plate base body (2).

2. Method according to claim 1,
**characterized in that**
at least one longitudinal side (7, 8) and/or transverse side (9, 10) of the plate base body (2) is applied transversely over a lower edge (11a - 14a) of the plate base body (2), wherein a textile wear layer (5) protruding over the upper flat side (6) of the plate base body (2) is applied to the plate base body (2), and wherein the protruding backing layer (5) is formatted by trimming to the dimensions of the plate base body (2) after application to the plate base body (2).

3. Method according to claim 1 or 2,
**characterized in that**
the size of the wear layer (3) and/or of the backing layer (5) is so chosen that the lateral projection of the wear layer (3) over the upper edge (11-14) and/or the lateral projection of the backing layer (5) over the upper edge (11a - 14a) is between 0.1 to 10 mm, preferably between 2 to 5 mm, in particular approximately 3 mm, before the formatting.

4. Method according to one of the preceding claims,
**characterized in that**
the plate base body (2) comprises a connecting profile on at least one longitudinal side (7, 8) and/or transverse side (9, 10), wherein the connecting profile protrudes transversely over the upper edge (11 - 14) and/or the lower edge (11a - 14a) of the plate base body (2), wherein the size of the wear layer (3) and/or of the backing layer (5) is so selected that the transverse projection of the wear layer (3) and/or the backing layer (5) is smaller than the transverse projection of the connecting profile or corresponds to the transverse projection of the connecting profile.

5. Method according to one of the preceding claims,
**characterized in that**
the deviation of the respective cutting edge of the wear layer (3) or of the backing layer (5) from the edge (11 - 14, 11a -14a) of the plate base body (2) upon formatting of the wear layer (3) and/or of the backing layer (5) by trimming, lies between ± 0.02 mm and ± 0.5 mm, preferably between ± 0.05 mm and ± 0.1 mm.

6. Method according to one of the preceding claims,
**characterized in that**
during the formatting of the plate base body (2) and/or during the formatting of the wear layer (3) and/or during the formatting of the backing layer (5), processing is first performed on the longitudinal sides and then on the transverse sides of the floor covering plate (1), wall or ceiling cladding plate and/or furniture component plate.

7. Method according to one of the preceding claims,
**characterized in that**
the wear layer (3) and the backing layer (5) are simultaneously trimmed and formatted to the dimensions of the plate base body (2).

8. Method according to one of the preceding claims,
**characterized in that**
the wear layer (3) and/or the backing layer (5) are formatted by trimming in the continuous process.

9. Method according to one of the preceding claims,
**characterized in that**
a self-sharpening cutting tool (15, 16) is used to trim the wear layer (3) and/or the backing layer (5), and/or a cutting tool (15, 16) is sharpened during the production of the plates (1) in the continuous process.

10. Method according to one of the preceding claims,
**characterized in that**
the wear layer (3) and/or the backing layer (5) is glued to the plate base body (2), preferably in the continuous process.

## Revendications

1. Procédé de fabrication d'une plaque de revêtement de sol (1), d'une plaque de revêtement mural ou de revêtement de plafond et/ou d'une plaque de composant de meuble, plus particulièrement conçue comme un élément de façade, de panneau ou de planche, avec un corps de base de plaque (2) et avec une couche utile textile (3) sur le côté supérieur du corps de base de plaque (2), un corps de base de plaque (2) de la plaque (1) étant d'abord formaté par usinage des arêtes du corps de base de plaque (2) au niveau des côtés longitudinaux (7, 8) et/ou des côtés transversaux (9, 10), **caractérisé en ce qu'**une couche utile textile (3) en saillie, au niveau d'au moins un côté longitudinal (7, 8) et/ou d'un côté transversal (9, 10) du corps de base de plaque (2) latéralement au-dessus d'une arête de bord supérieure (11 - 14) du corps de base de plaque (2) sur son côté plat supérieur, est appliquée sur le corps de base de plaque (2) et **en ce que** la couche utile textile (3) en saillie est formatée, après l'application sur le corps de base de plaque (2) par découpage aux dimensions du corps de base de plaque (2).

2. Procédé selon la revendication 1, **caractérisé en ce qu'**une contrepartie (5) en saillie au niveau d'au moins un côté longitudinal (7, 8) et/ou d'un côté transversal (9, 10) du corps de base de plaque (2) latéralement au-dessus d'une arête de bord inférieure (11a - 14a) du corps de base de plaque (2) sur son côté plat inférieur (6), est appliquée sur le corps de base de plaque (2) et **en ce que** la contrepartie (5) en saillie est formatée, après l'application sur le corps de base de plaque (2) par découpage aux dimensions du corps de base de plaque (2).

3. Procédé selon la revendication 1 ou 2, **caractérisé en ce que** la taille de la couche utile (3) et/ou de la contrepartie (5) est choisie de façon à ce que le dépassement latéral de la couche utile (3) au-dessus de l'arête de bord supérieure (11 - 14) et/ou le dépassement latéral de la contrepartie (5) au-dessus de l'arête de bord inférieure (11a - 14a) est, avant formatage, de 0,1 à 10 mm, de préférence de 2 à 5 mm, plus particulièrement d'environ 3 mm.

4. Procédé selon l'une des revendications précédentes, **caractérisé en ce que** le corps de base de plaque (2) comprend, au niveau d'au moins un côté longitudinal (7, 8) et/ou d'un côté transversal (9, 10), un profilé de liaison, le profilé de liaison dépassant latéralement au-dessus de l'arête de bord supérieure (11 - 14) et/ou au-dessus de l'arête de bord inférieure (11a - 14a) du corps de base de plaque (2) et la taille de la couche utile (3) et/ou de la contrepartie (5) étant choisie de façon à ce que le dépassement latéral de la couche utile (3) et/ou de la contrepartie (5) est inférieur au dépassement latéral du profilé de liaison ou correspond au dépassement latéral du profilé de liaison.

5. Procédé selon l'une des revendications précédentes, **caractérisé en ce que** l'écart entre l'arête de coupe de la couche utile (3) ou de la contrepartie (5) et l'arête de bord (11 **-** 14 ; 11a - 14a) du corps de base de plaque (2) est, lors du formatage de la couche utile (3) et/ou de la contrepartie (5) par découpage, entre ± 0,02 mm et ± 0,5 mm, de préférence entre ± 0,05 mm et ± 0,1 mm.

6. Procédé selon l'une des revendications précédentes, **caractérisé en ce que**, lors du formatage du corps de base de plaque (2) et/ou lors du formatage de la couche utile (3) et/ou lors du formatage de la contrepartie (5), un usinage de la plaque de revêtement de sol (1), de la plaque de revêtement mural ou de plafond et/ou de la plaque de composant de meuble a lieu d'abord au niveau des côtés longitudinaux puis au niveau des côtés transversaux.

7. Procédé selon l'une des revendications précédentes, **caractérisé en ce que** la couche utile (3) et la contrepartie (5) sont découpées simultanément et formatées aux dimensions du corps de base de plaque (2).

8. Procédé selon l'une des revendications précédentes, **caractérisé en ce que** le formatage de la couche utile (3) et/ou de la contrepartie (5) a lieu par découpe en continu.

9. Procédé selon l'une des revendications précédentes, **caractérisé en ce que**, pour le découpage de la couche utile (3) et/ou de la contrepartie (5), un outil de coupe (15, 16) auto-affûté est utilisé et/ou **en ce qu'**un outil de coupe (15, 16) est affûté pendant la fabrication des plaques (1) en continu.

10. Procédé selon l'une des revendications précédentes, **caractérisé en ce que** la couche utile (3) et/ou la contrepartie (5) est collée avec le corps e base de plaque (2), de préférence en continu.
